# EUROPEAN PATENT SPECIFICATION

(11) **EP 1 479 569 B1**
(45) Date of publication and mention of the grant of the patent: **02.08.2006**
(21) Application number: 02702420.7
(22) Date of filing: 26.02.2002
(51) Int. Cl.: B60R 21/16

(54) **METHOD AND DEVICE FOR THE ASSEMBLING OF A LATERAL AIRBAG MODULE**
VERFAHREN UND VORRICHTUNG FÜR DIE MONTAGE EINES SEITENAIRBAGMODULS
PROCEDE ET DISPOSITIF DE MONTAGE D'UN MODULE D'AIRBAG LATERAL

(43) Date of publication of application: 24.11.2004
(73) Proprietor: Dalphi Metal Espana, S.A., 28006 Madrid (ES)
(72) Inventor: PENA MORADILLOS, Manuel, E-36213 Vigo (ES)
(74) Representative: Elzaburu Marquez, Alberto
(86) International application number: PCT/ES2002/000083
(87) International publication number: WO 2003/072400

(56) References cited:
- EP-A- 0 968 887
- WO-A-97/21564
- US-A- 5 240 282
- US-A- 5 348 341
- US-A- 5 471 817
- US-A- 5 694 737
- US-A- 5 755 078

## Description

### FIELD OF THE INVENTION

The present invention relates to a method and a device for assembling a side airbag module that consists of a casing containing a folded gas pouch connected to a gas generator via one of its ends. More specifically, the invention relates to a side airbag for protecting the thorax of a vehicle's occupants.

### BACKGROUND OF THE INVENTION

The first airbags offered by the prior art for protecting motor-vehicle occupants had as their objective the restraint of those occupants during head-on collisions. To that end, once the collision has been detected, the front airbag bag inflates rapidly and restrains the vehicle occupant, preventing him from coming into contact with the steering wheel and instrument panel.

Later, airbags were proposed for protecting vehicle occupants in the event of side impacts in which they are exposed to serious injury if they enter into contact with the side windows or doors of the vehicle.

Therefore, airbags placed in the vehicle door have been proposed, in which the inflation means generate upward deployment such that the bag extends over the vehicle window, thereby preventing the occupant striking door elements and restraining the occupant's head so it is not forced through the window. By way of example of airbags with these characteristics, mention may be made of those described in patents EP 0590845, EP 686531, EP 703123, EP 844948, EP 857621 and EP 988185. Airbags placed in the vehicle seat have also been proposed, such as, for example, the airbag described in patent US 5 971 427.

The above patents offer different bag shapes in order to achieve adequate protection of the thorax/head region, and include division into compartments for more effective protection not only of the thorax but also of the head, even having, for this purpose, independent gas sources.

Therefore, for example, patent EP 771698 discloses an area for protecting the thorax that is inflated first of all and an area for protecting the head that is inflated afterwards, thereby achieving optimum inflation that is not impeded by the seatbelt.

WO97/21.64 discloses a folding method of an airbag having the features of the preamble of Claim 1.

US 5,471,817 discloses an automated system for folding airbags so that a small folded bag profile in a desirable bag deployment pattern results.

US 5,755,078 discloses a folding structure including a first folding apparatus to create a partially folded cushion and second folding apparatus to create a plurality of accordion folds.

### SUMMARY OF THE INVENTION

The objective of the present invention is not so much to propose a novel type of side airbag but rather to improve methods and means for assembling side airbags with bags of conventional shape in order to reduce their production costs and to promote their fitting in motor vehicles.

In a first aspect, the invention relates to a novel method for assembling side airbag modules in which the bag, of oval shape or other rounded shapes, has to be folded and inserted in a casing located on one of the edges of the bag, where the gas generator is also located.

According to the invention as defined in claim 1, the method comprises a first step of folding the side parts of the bag in the manner of bellows such that the width of the folded bag is slightly less than the width of the casing, a second step of rolling over on itself starting from the end opposite the casing and holding the other end fixed, thereby producing rolling in spiral fashion, and a third step of inserting the rolled bag in the casing.

In the preferred embodiment, folding is carried out Such that the folded bag and the unfolded bag have the same axis of symmetry and such that the latter coincides with the direction of deployment of the bag. In alternative embodiments, the two flanks of the bag are folded differently, which, if desired, means that rolling is carried out in a different direction from that of the axis of symmetry of the bag. In this way, from one and the same starting material, it is possible to assemble side airbag modules for location in different parts of the vehicle and which therefore have to deploy differently.

In a second aspect, the invention relates to a device for assembling side airbag modules according to the aforesaid method, consisting of the following means:
Firstly, means for positioning the unfolded bag on a fixed working plate such that the casing of the module is firmly secured during all the module assembly operations;
Secondly, means for folding the side parts of the bag in the manner of bellows. These means consist in the first instance of lower blades arranged on the fixed plate, and under the bag, that interact with a folding ram located on a movable upper plate and that descends until it is at a suitable height in terms of the bag for said blades to generate the first rotary movement of said side parts of the bag, delimiting the base of the folded bag with a width smaller than that of the casing. In the second instance, said folding means also include upper blades arranged on the movable upper plate that effect the second rotary movement of folding, exiting the movable plate under the folding ram;
Thirdly, means for rolling the folded bag that consist of clips equipped with opening and closure means for securing the bag when rolling commences and releasing it when rolling finishes, means for rotation on its axis for rolling the bag and means for translational movement bringing the clips closer to and moving them further away from the bag. The aforementioned rotary means have regulation and control elements that make it possible to give the bag the desired number of turns;
Fourthly, means for translational movement of the aforesaid folding and rolling means for retracting the folding means from the bag in a manner synchronized with actuation of the rolling means;
Fifthly, means for inserting the folded, rolled bag in the casing.

### DESCRIPTION OF THE FIGURES

Figures 1a and 1b show diagrammatic plan and cross-sectional views of the bag of the side airbag module that is the subject of the present invention in the deployed state.
Figures 2a and 2b show diagrammatic plan and cross-sectional views of the bag of the side airbag module that is the subject of the present invention in the folded state, before the rolling step is carried out.
Figures 3a and 3b show diagrammatic elevational and plan views of the device used for assembling a side airbag module according to the invention.
Figures 4a, 4b and 4c show diagrammatic views of the device used for assembling a side airbag module according to the present invention at various instants during the folding step. The elevational view of Figure 4a shows the start of the folding step by means of the downward movement of the folding ram. The plan views of Figures 4b and 4c show the action of the lower blades for achieving the bag folds and the form of those folds.
Figures 5a and 5b show diagrammatic elevational and plan views of the device used for assembling a side airbag module according to the present invention during the start of the bag rolling step, and Figures 6a and 6b show the same at the end of this step.
Figures 7a and 7b show diagrammatic elevational and plan views of the device used for assembling a side airbag module according to the present invention during the last step in the process.

### DETAILED DESCRIPTION OF THE INVENTION

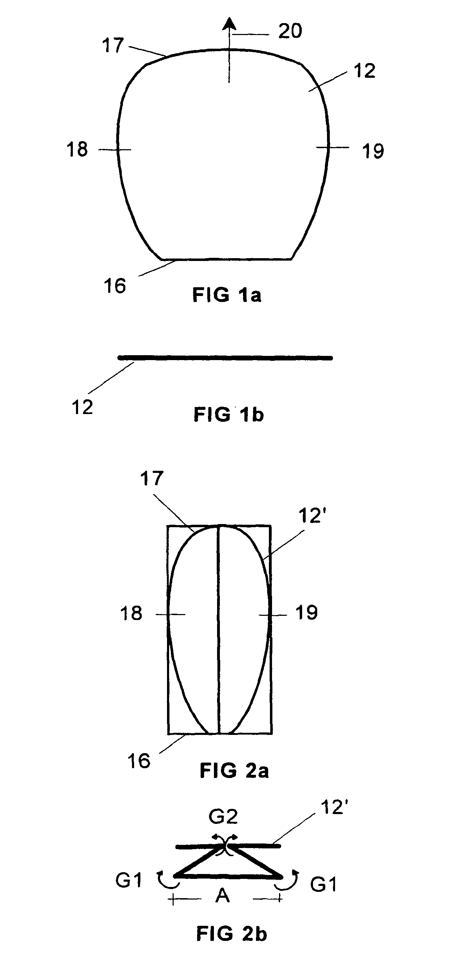

Firstly, a description will be given of the folding of the bag with reference to Figures 1 and 2.

Figure 1a shows a plan view of a bag 12 of rounded shape with a lower edge 16, an upper edge 17 and side edges 18, 19. This bag would be incorporated in the airbag module via the edge 16 via which it would receive the gas from a generator (not shown). Figure 1b shows a diagrammatic cross-sectional view of the bag 12 consisting of a thick line that does not show, to enhance simplicity, the two walls of the bag 12 and the space between them.

Figures 2a and 2b show the same views of the bag 12' after the folding step in which its width A is slightly less than the width of the casing. In these figures, the rotary movements G1 and G2 that have to take place in order to achieve the desired folds have been represented diagrammatically.

Next, the folded bag 12' is rolled over on itself, starting with the edge 17 and as far as the edge 16, forming a spiral-rolled band. Once located over the casing, it would be inserted in it.

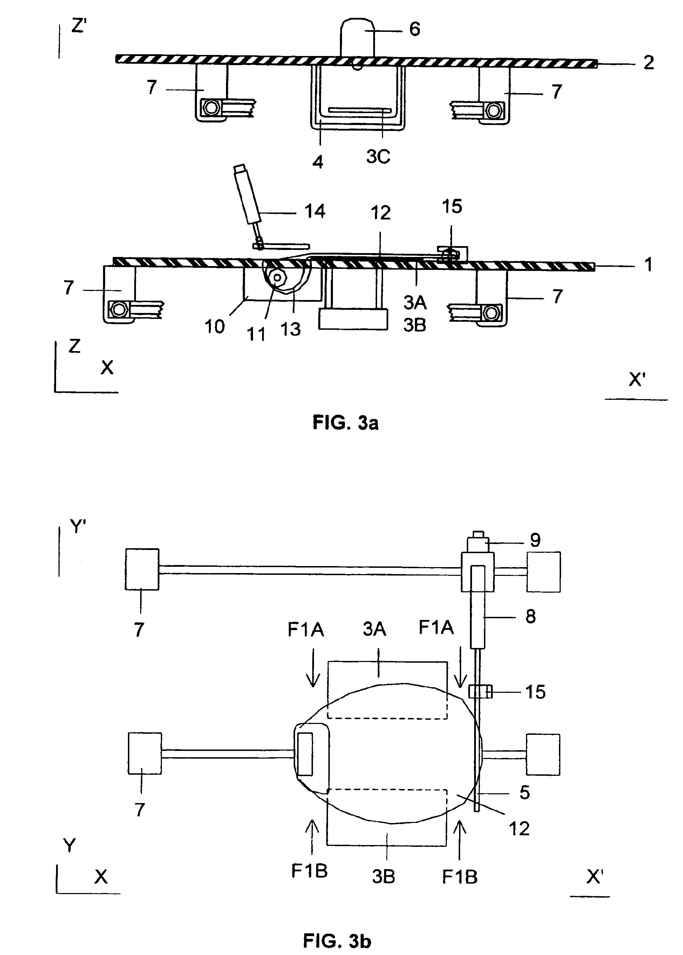

A description will now be given, according to Figures 3a and 3b, of the device for assembling a thorax airbag module according to the invention, which in turn will make it easier to understand the aforesaid method. In these figures, the three basic components of the airbag module - the casing 13, the generator 11 and the bag 12 - are shown.

Said device consists of the following elements:
- a fixed lower plate 1 and a movable upper plate 2 that act as support for the other elements that form the device;
- lower blades 3A and 3B that have means 7 for translational movement in the direction X-X' and that are used for carrying out bag folding operations by means of movements in the direction Y-Y', as indicated by the arrows F1A and F1B of Figure 3b. These blades are those that generate the rotations G1 represented diagrammatically in Figure 2b;
- upper blades 3C for generating the rotations G2 represented diagrammatically in Figure 2b;
- a folding ram 4 that is displaced vertically with the movable upper plate 2 in the direction Z-Z' and that has means 7 for translational movement in the direction X-X'. It interacts with the blades 3A, 3B and 3C in order to carry out bag folding operations;
- a clip 5 for carrying out bag rolling operations. It has an opening and closure mechanism 9, a rotation mechanism 8 and means 7 for translational movement in the direction X-X';
- a packer 6 that is used to push the bag and to insert it inside the casing 7 around the generator 11;
- a cradle 10 arranged on the fixed plate 1 to serve as support for the airbag module;
- a securing ram 14 for securing the bag 12 once it has been inserted in the casing 13;
- a U-shaped retention element 15 for preventing retraction of the clip 5 pulling out the bag 12.

When commencing the folding process, the casing 13 and the gas generator 11 are placed in the cradle 10, and the bag 12 is laid out over the fixed plate 1, above the blades 3A and 3B. The casing 13 is secured firmly to the cradle 10 by means (not shown) such as, for example, an electromagnet arranged in the cradle 10.

In the embodiment of the invention being described, the airbag is arranged such that its central axis has the direction X-X', as is fully visible in Fig. 3b, but the positioning of the cradle 10 or its fixing to the casing 13 could be varied such that the bag is displaced angularly with respect to the direction X-X', thereby achieving different effects in the opening of the bag 12.

Conventionally, the casing 13 has the gas generator 11 secured to its inside by means of two studs (not shown). The bag 12 surrounds the gas generator and is in turn connected to the casing 13 as the two studs also pass through it. The cradle 10 is provided with two detectors (not shown), one for detecting the presence of the casing 13 and the other for detecting the airbag module assembly by means of the detection of the presence of one of the aforesaid studs.

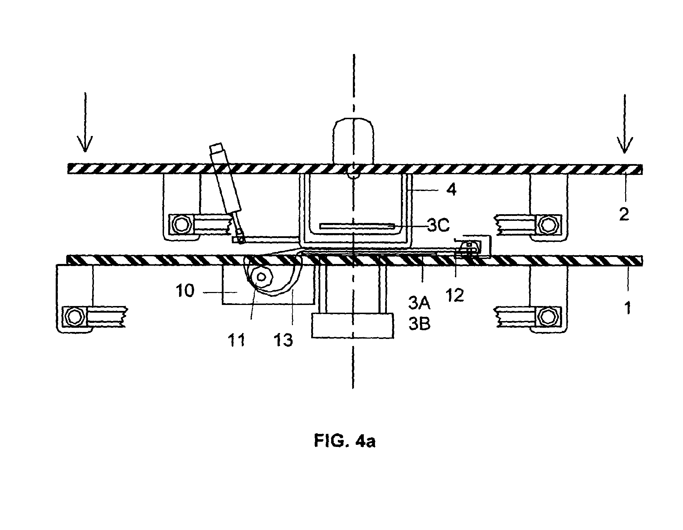

Figure 4a shows the state of the device after commencing the folding process. In the first instance, the movable upper plate 2 is released from pneumatic clamping, by means of stop cylinders (not shown), that hold it securely in the upper position. The movable upper plate 2 is then lowered, being brought closer to the folding ram 4 in the vicinity of the bag 12. This movement is generated by means of pneumatic actuation by cylinders equipped with a rod block in both directions of its travel, and it is guided by linear bearings on four calibrated bars in order to increase the reliability of the movement. This plate's movement ends at a mechanical stop and, at this point, pneumatic clamping takes place, via stop cylinders, of the movable plate 2 relative to the fixed plate 1, which maintains a suitable distance between the two plates. The fact that the aforesaid means have not been shown in Figure 4a should not constitute any difficulty in comprehension for a person skilled in the art.

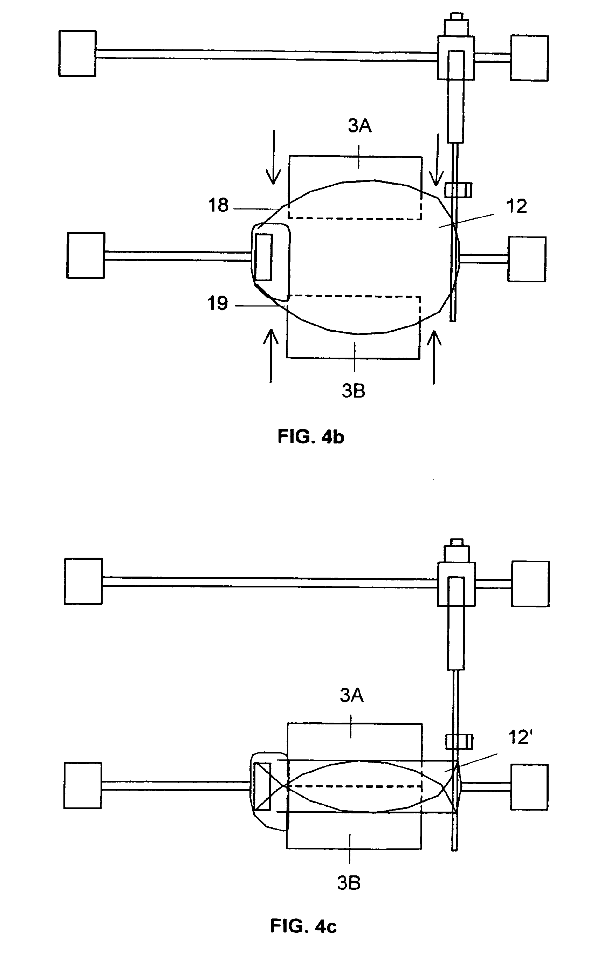

Next, and as shown in Figures 4b and 4c, the entry movements of the lower blades 3A and 3B take place, pushing the sides 18, 19 of the bag 12 on the folding ram 4, achieving, by virtue of the geometry thereof, a first shaping of the desired final folding. Next, the upper blades 3C undergo an exit movement, carrying out the desired folding. The movement of the blades takes place by means of independent, guided cylinders provided with detection devices for monitoring the preset movement and verifying that it has taken place in all operations.

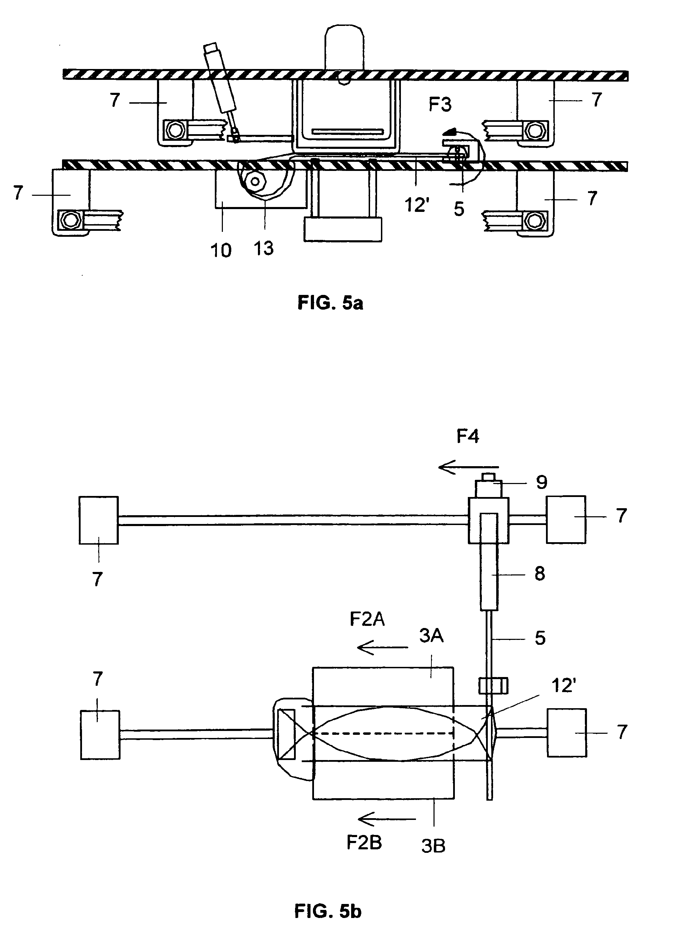

In the next step, the clips 5 close around the end of the folded bag 12' upon actuation of the opening/closure mechanism 9 that is actuated pneumatically by a cylinder and consists of an eccentric lever that allows the relative displacement of two long fingers, which, upon closure, leave the end of the bag located between the two of them but without pinching it. Next, and as shown in Figures 5a and 5b, the blades 3A, 3B are retracted as indicated by the arrows F2A, F2B, and also the upper blade 3C and the folding ram 4 are retracted from the zone of influence of the folded bag 12' and the casing 13. In parallel, the folded bag 12' is rolled with the clip 5 by means of rotary movements in the direction indicated by the arrow F3. Simultaneously with rotation, the clip is moved in the direction X-X', as indicated by the arrow F4, until it is positioned above the cradle 10.

The means 7 for translational movement of the aforesaid elements are composed of a servocontrolled motor drive and the transmission of the movement is achieved by means of a pulley and notched belt, the movements also being guided by means of ball-and-guide shoes. As regards the rotation mechanism 8, this is composed of a servocontrolled motor drive - transmission by means of notched belt - and a set of bearings for allowing the necessary relative rotations between the clip 5 and its opening/closure mechanism 9. All these movements, in addition to being servocontrolled, have programmable angular and linear interpolation. It is therefore possible to synchronize, as required, the translational movements of all the elements involved and the rotary movement of the clip 5. This makes it possible to avoid collisions and, above all, to successfully achieve different kinds of rolling of the folded bag 12' in terms of number of turns and compression, and thus to obtain different types of behaviour upon its deployment. The fact that the aforesaid means have not been shown in detail in Figures 5a and 5b should not constitute any difficulty in comprehension for a person skilled in the art.

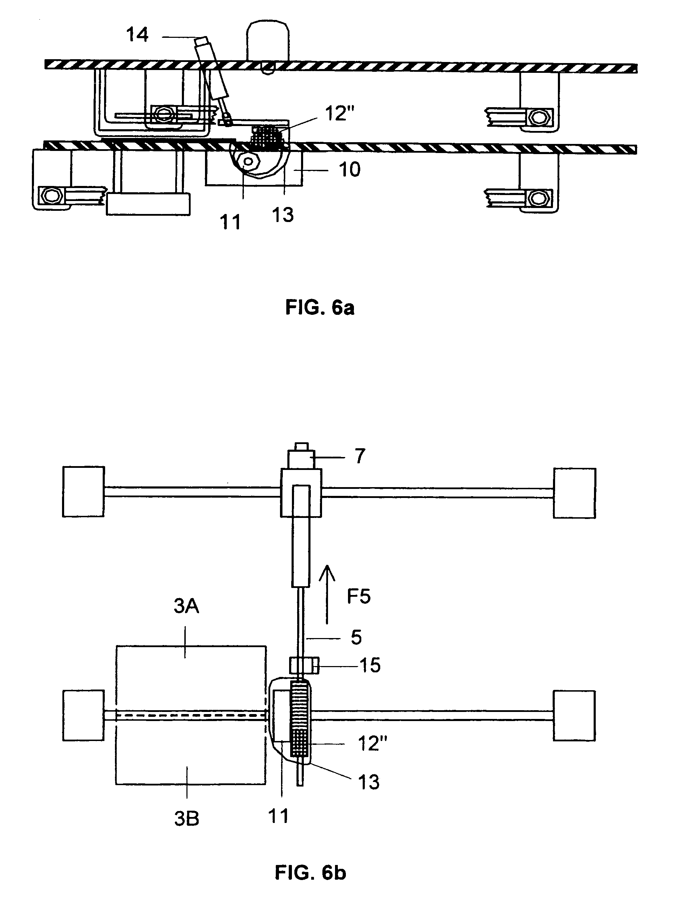

In the next step, as illustrated in Figures 6a and 6b, once the clip 5 arrives with the rolled bag 12'' at its position above the cradle 10, the securing ram 14, which incorporates a rocker mechanism, secures the rolled bag 12" and then actuates the mechanism 7 for translational movement of the clip 5, enabling it to withdraw from the zone of influence of the casing 13 and the rolled bag 12'' in the direction indicated by the arrow F5. Just as in the above cases, this is a guided movement composed of shoes and guides, but in this case its actuation is by means of cylinders. In this movement, the U-shaped retention element 15 prevents the clip 5 being able to pull the rolled bag 12" out as it retracts.

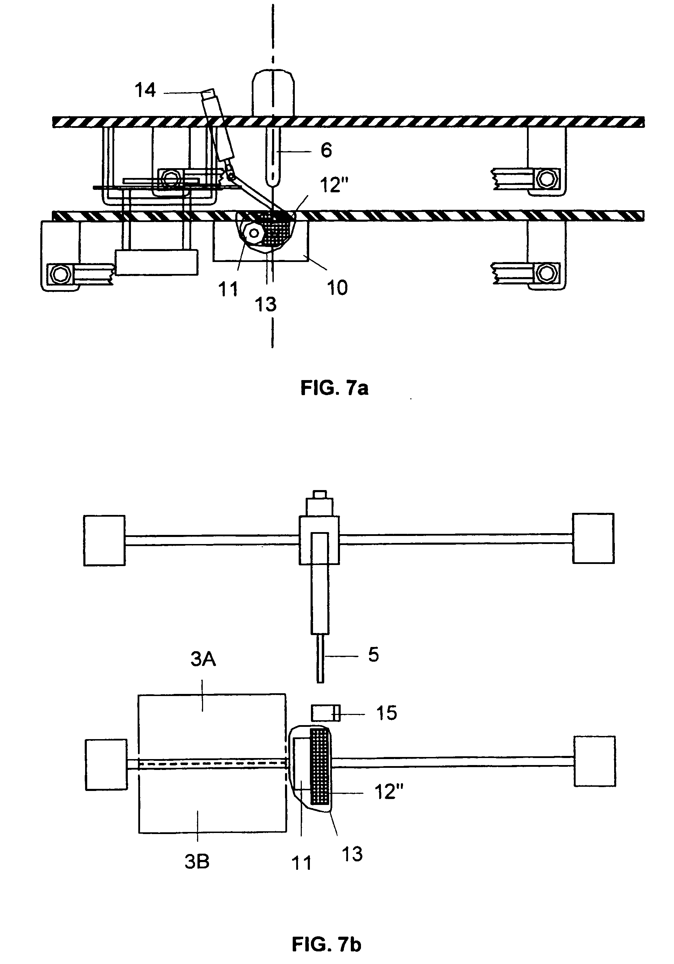

In the last step, as illustrated in Figures 7a and 7b, the vertical displacement of the packer 6 takes place as many times as is necessary, inserting the rolled bag 12'' in the casing 13, in the housing provided next to the generator 11. Actuation of this packer 6 is pneumatic, and involves a cylinder joined to a guide unit. When the rolled bag 12'' is inside the casing 13, the cover is placed on it manually and the assembly is retracted by deactivating the electromagnet that fixes it to the cradle 10.

Although one embodiment of the invention has been described and shown, it is obvious that modifications included within the scope thereof may be introduced into it, and it must be regarded as not being limited to said embodiment but to the content of the following claims.

## Claims

1. Method for assembling a side airbag module formed by a casing (13), a gas generator (11) and an inflatable bag (12), the inflatable bag (12) having a rounded shape with a lower edge (16) and an upper edge (17), a central longitudinal axis of symmetry (20), and being fixed to the casing (13) via its lower edge (16), **characterized in that** it comprises the following steps:
a) folding the side parts (18, 19) of the bag (12) with a first longitudinal fold (G1) towards the inner part of the bag (12) and a second longitudinal fold (G2) towards the outer part of the bag (12) such that the width A of the folded bag (12') is slightly less than the width of the casing (13);
b) rolling the folded bag (12') in step a) over on itself in spiral fashion from the upper edge (17) to the lower edge (16), being the rolling direction (X-X') coincident with the axis of symmetry (20); and
c) inserting the rolled bag (12") in step b) inside the casing (13).

2. Method for assembling a side airbag module according to Claim 1, **characterized in that** the folding line of said second longitudinal fold (G2) is very close to the axis of symmetry (20) of the bag (12).

3. Method for assembling a side airbag module according to Claim 1, **characterized in that** the axis of symmetry (20) of the bag (12) is displaced angularly with respect to the rolling direction (X-X').

4. Device for assembling a side airbag module according to the method that is the subject of the preceding claim, comprising:
a) means for securing the casing (13) of a side airbag module with its bag (12) deployed over a fixed working plate (1);
b) lower blades arranged on the fixed plate (1) that interact with a folding ram (4) located on a movable upper plate (2) for performing said first longitudinal fold (G1);
c) upper blades (3C) arranged on the movable plate (2) for performing said second longitudinal fold (G2);
d) clips (5) for rolling the folded bag (12') that are equipped with opening and closure means (9) for securing and releasing the folded bag (12');
e) means for packing the rolled bag (12") in the casing (13),
**characterized in that** it also comprises rotary means (8) and translational means (7) as actuators of said clips (5) such that the folded bag (12') can be rolled and translated in the X-X' direction at the same time.

5. Device for assembling a side airbag module according to Claim 4, **characterized in that** said rotary means (8) and translational means (7) include regulation and control elements for programming the number of turns of the rolled bag (12'').

## Patentansprüche

1. Verfahren zum Montieren eines Seitenairbagmoduls, das von einem Gehäuse (13), einem Gasgenerator (11) und einem aufblasbaren Sack (12) gebildet wird, wobei der aufblasbare Sack (12) eine gerundete Form mit einem unteren Rand (16) und einem oberen Rand (17), eine zentrale Längssymmetrieachse (20) aufweist und an dem Gehäuse (13) über seinen unteren Rand (16) befestigt ist, **dadurch gekennzeichnet, dass** es die folgenden Schritte aufweist:
a) der Seitenteile (18, 19) des Sackes (12) über eine erste Längsfalte (G1) zu dem inneren Teil des Sacks (12) hin und über eine zweite Längsfalte (G2) zu dem äußeren Teil des Sacks (12) hin, so dass die Breite A des gefalteten Sacks (12') etwas kleiner als die Breite des Gehäuses (13) ist;
b) Spiralartiges Aufrollen des im Schritt a) gefalteten Sacks (12') über sich selbst von dem oberen Rand (17) zu dem unteren Rand (16) hin, wobei die Aufrollrichtung (X-X') mit der Symmetrieachse (20) zusammenfällt; und
c) Einführen des im Schritt b) aufgerollten Sacks (12") in das Gehäuse (13).

2. Verfahren zum Montieren eines Seitenairbagmoduls nach Anspruch 1, **dadurch gekennzeichnet, dass** sich die Faltlinie der zweiten Längsfalte (G2) sehr nahe an der Symmetrieachse (20) des Sacks (12) befindet.

3. Verfahren zum Montieren eines Seitenairbagmoduls nach Anspruch 1, **dadurch gekennzeichnet, dass** die Symmetrieachse (20) des Sacks (12) im Winkel bezüglich der Aufrollrichtung (X-X') versetzt ist.

4. Vorrichtung zum Montieren eines Seitenairbagmoduls nach dem Verfahren nach den vorstehenden Ansprüchen, mit:
a) einer Einrichtung zum Befestigen des Gehäuses (13) eines Seitenairbagmoduls mit dessen entfalteten Sack (12) über einer festen Arbeitsplatte (1) ;
b) auf der festen Platte (1) angebrachte untere Klingen, die mit einem Faltstempel (4) in Wechselwirkung stehen, der auf einer beweglichen oberen Platte (2) angeordnet ist, um die erste Längsfaltung (G1) auszuführen.
c) auf der beweglichen Platte (2) angeordneten oberen Klingen (3C), um die zweite Längsfaltung (G2) auszuführen;
d) Klemmen zum Aufrollen des gefalteten Sacks (12'), die mit einer Öffnungs- und Schließeinrichtung (9) zum Befestigen und Lösen des gefalteten Sacks (12') ausgestattet sind;
e) einer Einrichtung zum Verpacken des aufgerollten Sacks (12") in dem Gehäuse (13),
**gekennzeichnet durch** eine Dreheinrichtung (8) und eine Verschiebeeinrichtung (7) als Betätigungselemente der Klemmen (5), so dass der gefaltete Sack (12) gleichzeitig aufgerollt und in der X-X'-Richtung verschoben werden kann.

5. Verfahren zum Montieren eines Seitenairbagmoduls nach Anspruch 4, **dadurch gekennzeichnet, dass** die Dreheinrichtung (8) und die Verschiebeeinrichtung (7) Regel- und Steuerelemente zum Programmieren der Anzahl der Windungen des aufgerollten Sacks (12') aufweisen.

## Revendications

1. Procédé d'assemblage d'un module formant coussin gonflable de sécurité latéral constitué par une enveloppe (13), un générateur de gaz (11) et un coussin gonflable (12), le coussin gonflable (12) présentant une forme arrondie avec un bord intérieur (16) et bord supérieur (17), un axe de symétrie longitudinal central (20) et étant fixé sur l'enveloppe (13) par son bord inférieur (16), **caractérisé en ce qu'**il comprend les étapes suivantes :
a) de pliage des parties latérales (18, 19) du coussin (12) avec un premier pli longitudinal (G1) vers la partie interne du coussin (12) et un second pli longitudinal (G2) vers la partie externe du coussin (12) de telle sorte que la largeur A du coussin plie (12') soit légèrement inférieure à la largeur de l'enveloppe (13);
b) d'enroulement du coussin plié (12') à l'étape a) sur lui-même à la manière d'une spirale à partir du bord supérieur (17) vers le bord inférieur (16), représentant la direction d'enroulement (X-X') qui coïncide avec l'axe de symétrie (20) ; et
c) d'insertion du coussin enroulé (12") à l'étape b) à l'intérieur de l'enveloppe (13).

2. Procédé d'assemblage d'un module formant coussin gonflable de sécurité latéral selon la revendication 1 **caractérisé en ce que** la ligne de pliage dudit second pli longitudinal (G2) est très proche de l'axe de symétrie (20) du coussin (12).

3. Procédé d'assemblage d'un module formant coussin gonflable de sécurité latéral selon la revendication 1, en ce que l'axe de symétrie (20) du coussin (12) est décalé angulairement par rapport à la direction d'enroulement (X-X').

4. Dispositif d'assemblage d'un module formant coussin gonflable de sécurité latéral selon le procédé constituant des revendications précédentes, comprenant :
a) un moyen destiné à fixer l'enveloppe (13) d'un module formant coussin gonflable de sécurité latéral avec son coussin (12) déployé au-dessus d'une plaque fonctionnelle fixe (1) ;
b) des lames inférieures agencées sur la plaque fixe (1) qui coopèrent avec un venu de pliage (4) situé sur une plaque supérieure mobile (2) afin de réaliser ledit premier pli longitudinal (G1) ;
c) des lames supérieures (3C) agencées sur la plaque mobile (2) afin de réaliser ledit second pli longitudinal (G2) ;
d) des pinces (5) destinées à enrouler le coussin plié (12'), qui sont équipées de moyens d'ouverture et de fermeture (9) afin de maintenir et de libérer le coussin plié (12') ;
e) un moyen destiné à compacter le coussin enroulé (12") dans l'enveloppe (13) ;
**caractérisé en ce qu'**il comprend aussi un moyen d'entraînement en rotation (8) et un moyen d'entraînement en translation (7) en tant qu'actionneurs desdites pinces (5) de telle sorte que le coussin plié peut être enroulé et déplacé dans la direction X-X' de manière simultanée.

5. Dispositif d'assemblage d'un module formant coussin gonflable de latéral selon la revendication 4, **caractérisé en ce que** ledit moyen d'entraînement en rotation (8) et ledit moyen d'entraînement en translation (7) comportent des éléments de régulation et de commande afin de programmer le nombre de spires du coussin (12") enroulé.
